# EUROPEAN PATENT APPLICATION

(11) **EP 1 798 440 A1**
(43) Date of publication of application: **20.06.2007**
(21) Application number: 06255110.6
(22) Date of filing: 03.10.2006
(51) Int. Cl.: F16D 66/02

(54) **Brake lining wear sensor**

(30) Priority: 13.12.2005 US 302023
(71) Applicant: ArvinMeritor Technology, LLC, Troy, MI 48084 (US)
(72) Inventor: Cory, Thomas M., Sterling Heights, Michigan 48312 (US); Harris, Bruce V., Shelby Township, Michigan 48315 (US); Kay, Joseph A., Highland, Michigan 48357 (US); Dacio de Gonzaga, Paul, Sterling Heights, Michigan 48310 (US)
(74) Representative: Jones, John Bryn

(57) **Abstract**

A brake lining wear sensor (30) includes a thermoplastic body (40) that is secured to a support plate between adjacent brake lining blocks. The support plate (46) includes an opening (80) formed within a gap between adjacent lining blocks. The thermoplastic body is received within the opening and includes a central bore that extends from a first body end (46) to a second body end. A sensor wire (42) is received within the bore and includes a single looped portion (62) that extends outwardly from an end face of the second body end. The single looped portion is positioned at a predefined maximum lining wear limit. When the single looped portion is broken due to contact with a rotating brake component, a warning signal is communicated to an operator to indicate that the predefined maximum lining wear limit has been reached.

## Description

### TECHNICAL FIELD

The subject invention relates to a brake lining wear sensor that includes a body supporting a sensor wire positioned between adjacent lining blocks, wherein the brake lining wear sensor generates a warning signal to indicate when vehicle brake linings should be replaced.

### BACKGROUND OF THE INVENTION

Brake lining wear sensors are used to indicate that brake linings have worn to a level where the brake linings should be replaced. There are many different types of brake lining wear sensors including electrical sensors and purely mechanical sensors. One type of mechanical sensor generates an audible squeaking noise that indicates linings should be replaced. These types of sensors are disadvantageous for heavy vehicle applications as audible noise is difficult to hear during vehicle operation. Another type of mechanical sensor requires constant visual checking at each pad location. This is tedious and time consuming.

These types of mechanical sensors are not preferred because operators may not perform visual inspections in a timely manner. This can result in the brake linings wearing down too far, and potentially exposing rivets that hold the brake linings to an associated support plate. If the rivets are exposed, they could contact and damage the rotating brake drum.

Electrical sensors have also been used for brake lining wear sensors. These types of sensors are often complicated and are used to continuously monitor and calculate wear of the brake lining material at multiple, different, wear levels. These types of sensors are also often embedded within brake lining material, which increases cost and assembly time of an associated brake shoe assembly.

Thus, there is a need for a simplified electrical brake lining wear sensor that is low cost and can be easily installed, as well as overcoming the other identified deficiencies of the prior art.

### SUMMARY OF THE INVENTION

A brake lining wear sensor includes a body that is secured to a support plate between adjacent brake lining blocks. The body includes a bore extending from a first end to a second end that receives a sensor wire. The sensor wire includes a single looped portion that extends outwardly from an end face of the second end, and which is positioned at a predefined maximum lining wear limit. When the single looped portion is broken due to contact with a rotating brake component, a warning signal is communicated to an operator to indicate that the predefined maximum lining wear limit has been reached. The body is preferably formed from a thermoplastic material such that further contact between the brake lining wear sensor and the rotating brake component, after the single looped portion has been broken, does not damage the rotating brake component.

The support plate includes an opening formed within a gap between adjacent lining blocks. The thermoplastic body is received within the opening such that the first end extends outwardly from one side of the support plate and the second end extends outwardly from an opposite side of the support plate. The second end comprises an enlarged head that includes a slot that extends inward into the central bore such that the enlarged head is separated into first and second head portions. The first end includes a threaded portion that engages a nut to clamp the support plate between the enlarged head and the nut. Also, when the nut is threaded onto the first end, the sensor wire is clamped within the slot between the first and second head portions to position the single looped portion at the predefined maximum lining wear limit.

The subject invention provides a simple, low-cost brake lining wear sensor that is easily installed into a brake assembly, and which can be easily incorporated into existing vehicle electronic control systems. These and other features of the present invention can be best understood from the following specification and drawings, the following of which is a brief description.

### BRIEF DESCRIPTION OF THE DRAWINGS

Figure 1 is a schematic view of a drum brake with a brake lining wear sensor incorporating the subject invention.
Figure 2 is an exploded view of a brake lining wear sensor incorporating the subject invention.
Figure 3 is an assembled view of the brake lining wear sensor of Figure 2.
Figure 4 is top view of the brake lining wear sensor of Figure 2 installed in a brake shoe.
Figure 5 is a side view of the brake lining wear sensor of Figure 4.
Figure 6 is a cross-sectional view of the brake lining sensor of Figure 5.

### DETAILED DESCRIPTION OF THE PREFERRED EMBODIMENT

A drum brake 10 includes brake shoes 12 that selectively engage a rotating brake drum 14 in response to a braking request. Each brake shoe 12 includes a plate 16 that supports a brake lining 18. The brake lining 18 is preferably formed as a plurality of brake lining blocks 18a, 18b that are spaced apart from each other along the plate 16.

The brake lining 18 includes a lining surface 20 that engages an inner surface 22 of the brake drum 14 during each braking actuation. An actuator A is used to move the brake shoes 12 into engagement with the brake drum 14. Any type of actuator A could be used to actuate the brake shoes 12, such as a cam, hydraulic cylinder, etc., for example. Contact between the brake lining 18 and the brake drum 14 results in wear of the brake lining 18. As the brake lining 18 wears, the thickness of brake lining material decreases.

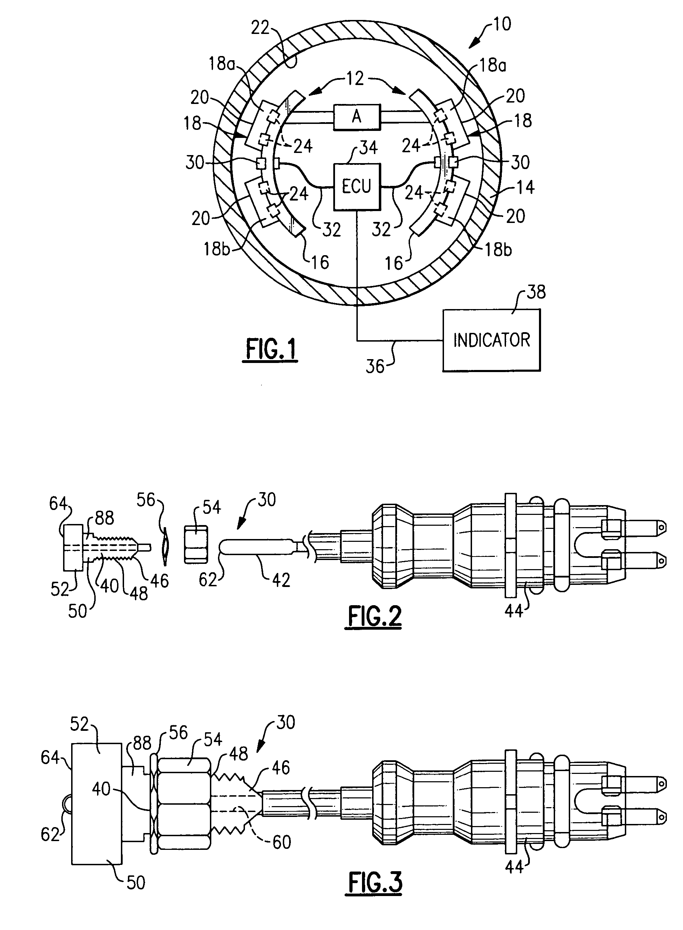

The brake shoes 12 need to be replaced before the brake linings 18 wear out. Typically each brake lining block 18a, 18b is attached to the plate 16 with a plurality of rivets 24 (schematically shown in Figure 1). If the brake lining material wears below the height of the rivets 24, then the rivets 24 could contact the inner surface 22 of the brake drum 14 during brake applications. This could cause damage to the brake drum 14.

In order to avoid damaging the brake drum 14 and to notify an operator when the brake linings 18 have worn to a predetermined maximum brake lining wear level limit, the drum brake 10 includes a brake lining wear sensor 30 that is attached to the plate 16 of each brake shoe 12.

When the brake linings 18 have worn to the predetermined maximum brake lining wear level the brake lining wear sensor 30 generates a signal 32 that is transmitted or otherwise communicated to an electronic control unit (ECU) 34. The ECU 34 then generates a warning signal 36 that is communicated to the operator by a warning indicator 38, such as a lamp, display screen, alarm beep, etc.

The brake lining wear sensor 30 is shown in greater detail in Figures 2-6. The brake lining wear sensor 30 includes a body 40 and a sensor wire 42 that is coupled to an electrical connector 44 that is electrically connected to the ECU 34. The body 40 includes a first portion 46 that has a threaded outer surface 48 and a second portion 50 that has an enlarged head portion 52.

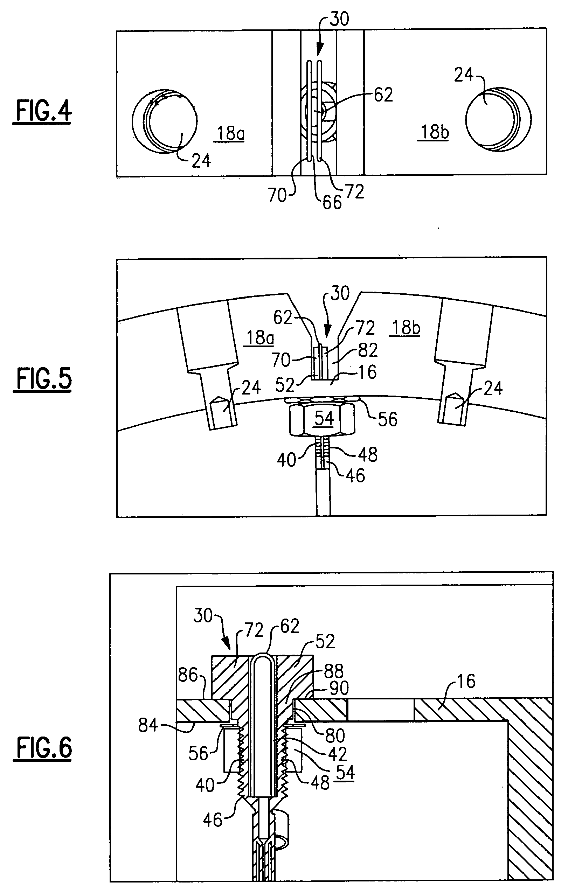

A nut 54 is threaded onto the threaded outer surface 48 to attach the brake lining wear sensor 30 to the plate 16. A spring washer 56 is positioned between the plate 16 and the nut 54 (see Figures 5 and 6). The spring washer 56 is used to provide a pre-load force for the attachment interface such that the body 40 is firmly held in place.

The sensor wire 42 is inserted through a bore 60 that is formed within the body 40. The sensor wire 42 includes a single looped portion 62 that extends outwardly beyond an end face 64 of the enlarged head portion 52, as shown in Figure 3. When the brake lining wear sensor 30 is installed on the plate 16, the single looped portion 62 is positioned at the predetermined maximum brake lining wear level. When the brake lining material wears to this predetermined maximum brake lining wear level, the inner surface 22 of the brake drum 14 will contact the single looped portion 62. This contact will break the single looped portion 62, which will result in the warning signal 36 being sent to the operator. A worker in this art will understand how to provide the appropriate circuitry to achieve this function.

Once the single looped portion 62 is broken the brake drum 14 will continue to contact the brake lining wear sensor 30. The body 40 is preferably formed from a thermoplastic material such that contact between the body 40 and the inner surface 22 of the brake drum 14 will not result in damage to the brake drum 14. Preferably, the body 40 is formed as a single piece by a molding process.

As shown in Figure 4, the enlarged head portion 52 includes a slit or slot 66 that extends axially from one edge of the enlarged head portion 52 to an opposite edge of the enlarged head portion 52. The slot 66 thus separates the enlarged head portion 52 into first 70 and second 72 head portions.

As shown in Figures 2 and 3, the sensor wire 42 is inserted through the bore 60 that initiates in the first portion 46 of the body 40. The bore 60 transitions into the slot 66 (Figure 4). As shown in Figures 5 and 6, the sensor wire 42 is positioned within the bore 60 and the slot 66 such that the single looped portion 62 extends outwardly just beyond the end face 64 of the enlarged head portion 52. When the nut 54 is tightened on the threaded outer surface 48 of the body 40, the sensor wire 42 is clamped between the first 70 and second 72 head portions to securely hold the sensor wire 42 in place.

As shown in Figure 6, the plate 16 includes an opening 80 that receives the body 40 of the brake lining wear sensor 30. This opening 80 can be a pre-existing opening in the plate 16, such as for a fastener, for example. The opening 80 is positioned between adjacent brake lining blocks 18a, 18b that are separated from each other by a gap 82 (see Figure 5). Thus, the brake lining wear sensor 30 is not embedded in the brake lining material. This simplifies assembly and reduces cost.

When the brake lining wear sensor 30 is inserted through the opening 80, the first portion 46 of the body 40 extends outwardly from one side 84 of the plate 16, and the second portion 50 extends outwardly from an opposite side 86 of the plate. The body portion includes a flanged area 88 that transitions from the first portion 46 into the enlarged head portion 52. The flanged area 88 is generally received within the opening 80 of the plate 16 such that a bottom end surface 90 of the enlarged head portion 52 abuts directly against the plate 16. When the nut 54 is tightened onto the threaded outer surface 48, the enlarged head portion 52 is securely held in place against the plate 16.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A brake lining wear sensor assembly comprising:
a body having a first end adapted for attachment to a brake lining support plate, and a second end defining an end face that is positioned at a predetermined brake lining wear level limit;
a sensor wire including a single looped portion extending outwardly beyond said end face; and
a controller that generates a warning signal when said single looped portion is broken due to contact with a rotating brake component to indicate that the predetermined brake lining wear level limit has been reached.

2. The brake lining wear sensor assembly according to claim 1 wherein said body includes a central bore extending from said first end toward said second end, said sensor wire being received within said central bore.

3. The brake lining wear sensor assembly according to claim 2 wherein said second end includes an enlarged head portion having a slot extending from said end face toward said first end such that said enlarged head portion is separated into first and second head portions, said slot transitioning into said central bore.

4. The brake lining wear sensor assembly according to claim 3 wherein said sensor wire is clamped between said first and said second head portions.

5. The brake lining wear sensor assembly according to claim 3 or 4 wherein said first end includes a threaded outer surface that is threadably engaged with a nut to clamp the brake lining support plate between said nut and said enlarged head portion.

6. A brake shoe assembly comprising:
a backing plate;
at least one brake lining block fixed to said backing plate, said at least one brake lining block having an outer surface that contacts a rotating brake component;
a brake lining wear sensor including a body having a first portion extending through said backing plate, and a second portion defining an end face that is positioned at a predetermined brake lining wear level limit adjacent said at least one brake lining block, and including a sensor wire having a single looped portion extending outwardly beyond said end face; and
a controller that generates a warning signal when said single looped portion is broken due to contact with the rotating brake component to indicate that the predetermined brake lining wear level limit has been reached.

7. The brake shoe assembly according to claim 6 wherein said body includes a central bore extending from said first portion to said second portion, said sensor wire being received within said central bore.

8. The brake shoe assembly according to claim 7 wherein said second portion includes an enlarged head having a slot extending from said end face toward said first portion such that said enlarged head is separated into first and second head portions, said slot transitioning into said central bore such that said sensor wire extends through said central bore from said first portion with said single looped portion being compressed within said slot between said first and said second head portions.

9. The brake shoe assembly according to claim 8 wherein said backing plate includes an opening and wherein said body is inserted through said opening such that said first portion extends outwardly from a first side of said backing plate and said second portion extends outwardly from a second side of said backing plate opposite said first side, and wherein said second portion includes a threaded outer surface for engagement with a nut such that said backing plate is clamped between said enlarged head and said nut.

10. The brake shoe assembly according to claim 9 including a spring washer positioned directly between said nut and said first side of said backing plate.

11. The brake shoe assembly according to any one of claims 6 to 10 wherein said at least one brake lining block comprises at least first and second brake lining blocks spaced apart from each other by a gap along said backing plate, and wherein said brake lining wear sensor is secured to said backing plate within said gap and between said first and said second brake lining blocks such that said brake lining wear sensor is not embedded within brake lining material.

12. The brake shoe assembly according to any one of claims 6 to 11 wherein said single looped portion is contacted by the rotating brake contact prior to said end face of said body contacting the rotating brake component.

13. The brake lining wear sensor assembly according to any one of claims 1 to 5 or the brake shoe assembly according to any one of claims 6 to 12 wherein said body is comprised of a thermoplastic material.
